(19) Europäisches Patentamt

European Patent Office

Office européen des brevets

(11) **EP 0 779 732 A2**

(12) **EUROPEAN PATENT APPLICATION**

(43) Date of publication:
**18.06.1997 Bulletin 1997/25**

(51) Int Cl.6: **H04M 3/56**, H04L 12/18

(21) Application number: **96203451.8**

(22) Date of filing: **06.12.1996**

| | |
|---|---|
| (84) Designated Contracting States:<br>**AT BE CH DE DK ES FR GB GR IE IT LI LU MC NL PT SE**<br><br>(30) Priority: **12.12.1995 US 571058**<br><br>(71) Applicant: **OnLive! Technologies, Inc.**<br>**Cupertino, California 95014 (US)** | (72) Inventor: **Narayan, Shankar S.**<br>**Palo Alto, California 94306 (US)**<br><br>(74) Representative: **BROOKES & MARTIN**<br>**High Holborn House**<br>**52/54 High Holborn**<br>**London, WC1V 6SE (GB)** |

(54) **Multi-point voice conferencing system over a wide area network**

(57) An interactive network system (100) communicates speech and associated information among a plurality of participants at different sites (104, 106). An example of the associated information is lip synch image information related to the speech. The system contains a speech server (110) for managing data streams set by the participants. Each participant uses a multimedia computer (114) and a modem (122) to connect to the network. Because many modems have a low bit rate, it is important to compress the speech and associated information. The server (110) receives the data streams from at least two participants and contains means (200) for combining these data streams into a single data stream having a bit rate that can be handled by the modem of the third participant. As a result, a plurality of participants can conduct speech and image communication using the network.

FIG.1

EP 0 779 732 A2

## Description

### Field of the Invention

The present invention relates to wide-area network communication, and in particular, to interactive communication of speech and related information over a wide-area network.

### Background of the Invention

Computer technology went through major developments during the past several years. The first development is the availability of low cost yet powerfull personal computers. The reduction in cost makes computers affordable to a large number of people. As a result, the number of computers increases exponentially. The processing power of these computers is more than that of mainframe computers existed about ten years ago. Further, these computers typically come with modems, sound cards, high resolution video boards, etc., which allow them to process multimedia information, such as speech and images.

The second development is the popularity of a wide-area network called Internet. Internet is currently the largest computer network in existence. It is a worldwide interconnection of millions of computers, from low end personal computers to high-end mainframes. The Internet grew out of work funded in the 1960s by the U. S. Defense Department's Advanced Research Projects Agency. For a long time, Internet was used by researchers in universities and national laboratories to share information. As the existence of the Internet became more widely known, many users outside of the academic/research community (e.g., employees of large corporations) started to use Internet to carry electronic mails. In 1989, a wide-area information system known as the World Wide Web ("the Web") was developed. The Web is a wide-area hypermedia information retrieval system aimed to give universal access to a large universe of documents. A user can use a software (called a browser) to retrieve web documents (typically displayed in graphic form) and navigate the Web using simple commands and popular tools such as point-and-click. Because the user does not have to be technically trained and the browser is pleasant to use, it has the potential of opening up the Internet to the masses. Consequently, many communication companies have developed hardware and software products which allow people to use their computers to access the Internet.

Because of these developments, many people have the resources to electronically communicate with other people using the Internet. Currently, most of the communication involve text (e.g., electronic mails) and graphics (e.g., Web documents). Further, the mode of communication is passive, i.e., the information can be read or displayed by recipients a long time (e.g., hours or days) after its creation.

It is known that human beings enjoy interaction with other people. It is also known that speech and facial expression associated with speech are powerful communication tools. Thus, it is desirable to use the Internet to interactively communicate speech and associated facial expression. Currently, there is no product that can efficiently achieve this mode of communication.

### Summary of the Invention

The present invention can be used in an interactive network system for communicating speech and associated information among a plurality of participants at different sites. Each participant uses a multimedia computer to connect to the network. The multimedia computer contains a microphone, at least one loudspeaker, a display device and a network accessing device (such as a modem). A speech processing software is executing in the computer while an interactive speech session takes place. The participant can speak to the microphone. The software encodes the speech and associated data, and sends the data to a speech server using the network accessing device. The speech server can accumulate speech data from one of more participants at different sites, and deliver a combined speech data to a designation site. The software in the multi-media personal computer can decode information received from the server, and reproduce the speech through its loudspeaker.

Many modems have a low communication rate (i.e., bits-per-second). Thus, it is important to compress the speech and associated data so that it can be handled by the modems. The compression method of the present invention takes into account of the characteristics of speech so as to be able to communicate speech within the communication rate of the modem.

One aspect of the compression method is a novel method to obtain the acoustic characteristics of the echo path and perform echo cancellation. The system can also detect silence. During a silence period, there is no need to transmit speech information. Thus, the ability to accurately detect silence can increase the compression ratio. This method involves determining residual echo energy, and use this energy in the determination of silence.

The echo energy is an acoustic characteristic of the user site. The present invention also involves a novel method of measuring and calibrating the acoustic characteristics of the user site.

The present invention also uses novel methods to compress speech data by using a combination of vector and scalar quantization of linear predictive coding parameters, multi-pulse excitation parameters, pulse position coding, and pulse amplitude coding, either individually or in combination. Further, speech compressed using these methods can be decompressed, thereby recovering the original speech.

The present invention also involves novel and computationally efficient lip synching methods. It is observed that the lip positions in human beings can be determined to a large extent by the first two peaks, known as formant frequencies, of the short term spectra of speech and the short-term energy of the speech signal. Further, the variables associated with the lip positions are highly correlated. The present invention exploits these relationship to code the lip positions using a very small number of bits. These bits are sent to a destination site (via the server). The computer at the destination site can draw a face with appropriate lip positions on the display device.

## Brief Description of the Drawings

Fig. 1 is a drawing showing a multi-point voice conferencing system of the present invention.
Fig. 2A is a block diagram of an encoder of the present invention.
Fig. 2B is a block diagram of a decoder of the present invention.
Fig. 2C is a schematic diagram of a participant site of the present invention.
Fig. 3 is a block diagram of an arrangement for measuring acoustic characteristics in accordance with the present invention.

## Detailed Description of the Invention

The present invention comprises a novel voice conferencing system and associated methods. The following description is presented to enable any person skilled in the art to make and use the invention. Descriptions of specific applications are provided only as examples. Various modifications to the preferred embodiments will be readily apparent to those skilled in the art, and the general principles defined herein may be applied to other embodiments and applications without departing from the spirit and scope of the invention. Thus, the present invention is not intended to be limited to the embodiments shown, but is to be accorded the widest scope consistent with the principles and features disclosed herein.

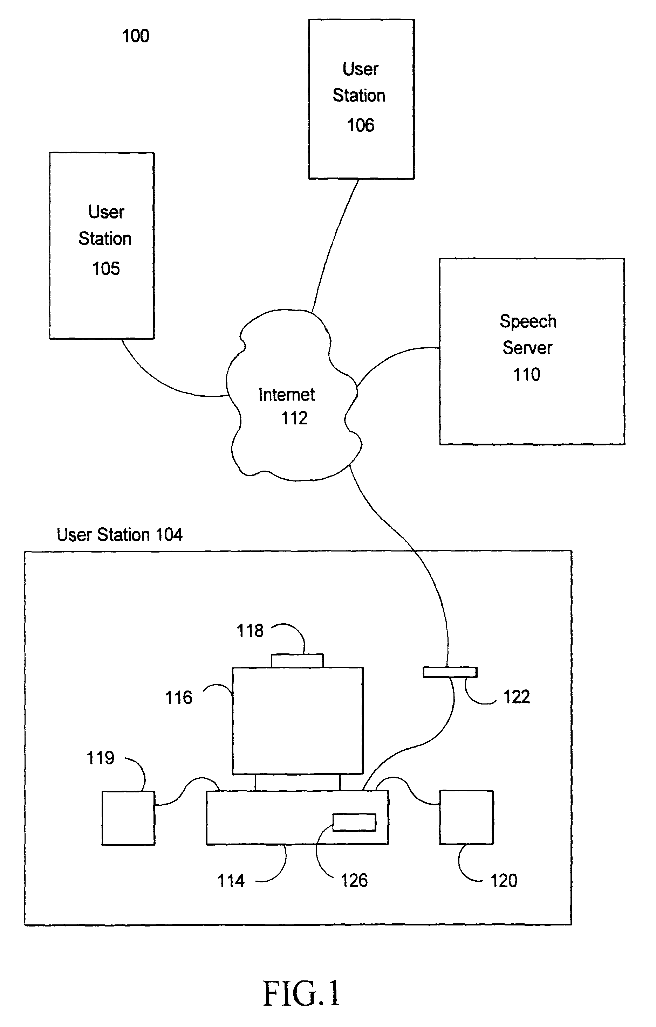

Fig. 1 is a drawing showing a multi-point voice conferencing system 100 of the present invention. System 100 comprises a plurality of user stations, such as stations 104-106, and a speech server 110. User stations 104-106 and speech server 110 are connected to a data network such as the Internet 112.

The structure of the user stations are similar. Thus, only one of the stations (for example, station 104) will be described in detail here. Station 104 comprises a desktop computer 114, a display device 116, a microphone 118, two loudspeakers 119 and 120, and a modem 122. Desktop computer 114 contains software (not shown) which provides a connection to Internet 112 using modem 122. A person in station 104 can talk to microphone 118. The speech is then processed by a software 126 of the present invention executing in desktop computer 114. The processed speech is then sent to server 110 via Internet 112. Software 126 can also process speech information received from server 110 and send the output to loudspeakers 119 and 120. Two loudspeakers are used in the present embodiment to generate stereo effects. It should be appreciated that one loudspeaker could be used if no stereo effect is needed.

In this embodiment, all speeches are sent by the user stations to speech server 110, which then directs the speeches to their destination. In addition to speeches, lip synching information is also sent and received by the user stations (again routed through server 110).

One aspect of the present invention is methods to reduce the bandwidth requirement for speech and lip-synching information transmission. An important factor affecting the performance of system 100 is the speed of data transmission between user stations and the server. Currently, the transmission speed of a modem in a dial-up telephone line is around 30 kilobits per second (kbps). Even when an ISDN (Integrated Services Digital Network) line is used, the transmission speed is about 128 kbps. On the other hand, the transmission of uncompressed speech alone requires a higher bandwidth than can be supported using current telephone lines. If it is necessary to transmit other information (e.g., control data and lip-synching information), the bandwidth requirement is much higher. Consequently, there is a need to reduce the bandwidth requirement.

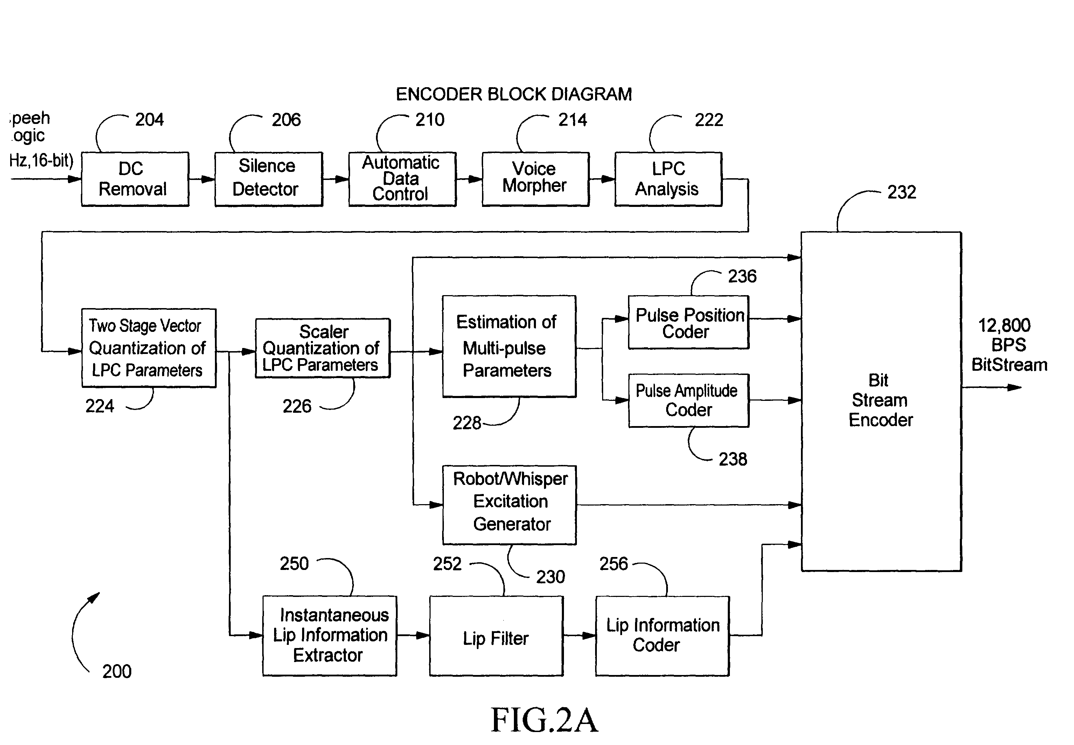

Software 126 contains an encoder and a decoder. Fig. 2A is a block diagram of an encoder 200 in accordance with the present invention. Various blocks of encoder 200 will be discussed in detailed in this specification. Encoder 200 accepts speech input digitized at 8 kHz and a width of 16 bits per sample. The DC component of the digitized speech is removed by a DC removal block 204. Encoder 200 also contains a silence detector 206. When a period of silence is detected, there is no need to transmit speech information. Encoder 200 contains an automatic gain control 210 so as to allow speech having a wide dynamic range to be adequately processed by the system. Encoder 200 contains a voice morpher block 214 for allowing a change of the characteristics of the speech. The speech data then goes to a linear predictive coding (LPC) analysis block 222 to generate a plurality of LPC parameter. The parameters pass through a two-stage vector quantization block 224. The result is delivered to a scalar quantization block 226 and a lip information extraction block 250. The resulting parameters from block 226 are delivered to a multi-pulse excitation parameters generator 228, a robot/whisper excitation generator 230, and a bit stream encoder 232. The output of robot/whisper excitation generator 230 is also delivered to bit stream encoder 232. The output of multi-pulse excitation parameter generator 228 is coupled to a pulse-position coder 236 and a pulse-amplitude coder 238. The outputs of coders 236 and 238 are delivered to bit stream coder 232.

The output of lip information extractor 250 is delivered to a lip filter 252, which is connected to a lip information coder 256. The result of lip information coder 256 is sent to bit stream encoder 232.

As explained in more detail below, the input speech (digitized at 8 kHz and having a width of 16 bits per sample) can be compressed such that the output of bit stream encoder 232 is approximately 12,800 bits-per-second. This data stream is sent to speech server 110 via the Internet.

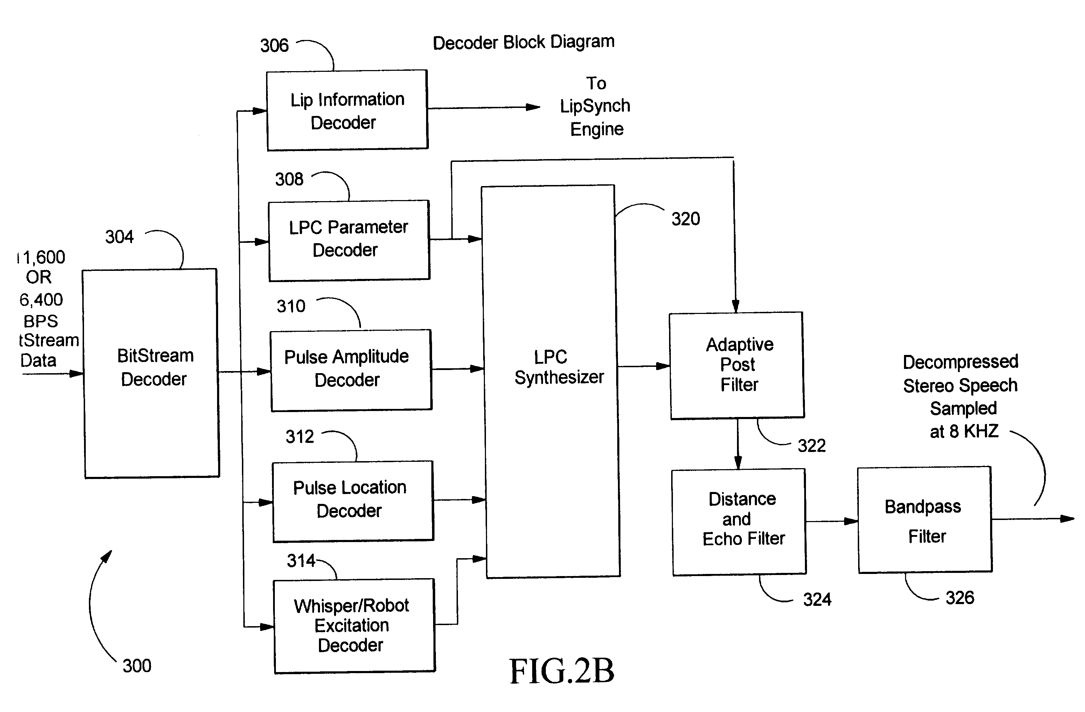

Fig. 2B is a block diagram of a decoder 300 which can decode bit streams received from speech server 110. Decoder 300 contains a bit stream decoder 304 which is able to recover information from the bits sent by speech server 110. The information is sent to a lip information decoder 306, which generates lip position information to a lip synch program for generating graphics of lips. The information from bit stream decoder 304 is also sent to a LPC parameter decoder 308, a pulse amplitude decoder 310, a pulse location decoder 312, and a whisper/robot excitation decoder 314. The outputs of these decoders are sent to a LPC synthesizer 320 which generates digital speech signals. The digital speech signal is sent to an adaptive post filter 322, which also accepts information from LPC parameter decoder 308. The output of adaptive post filter 322 is sent to an echo filter 324 and then to a bandpass filter 326. The result is a decompressed stereo speech which is transformed into acoustic sound by loudspeakers 119 and 120.

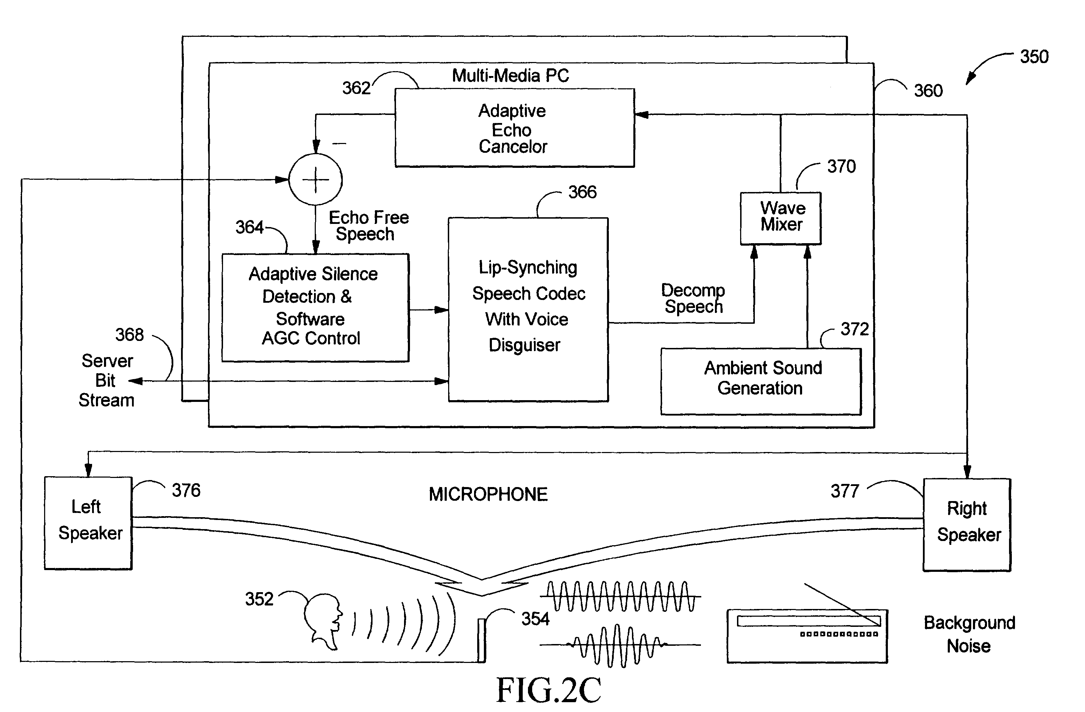

Fig. 2C is a schematic diagram of a participant site 350 of the present invention. A participant 352 speak to a microphone 354, which transform the sound signal into electrical signal. Typically, the site contains background noise (e.g., from a radio). The electrical signal is combined with signals from an adaptive echo cancelor 362 in a multimedia personal computer 360. The result is almost echo free speech. This signal is sent to an adaptive silence detection and software automatic gain control (AGC) module 364. The output of this module is sent to a lip-synching and speech codec 366. Codec 366 incorporates the ability to disguise voice (i.e., voice morph). Codec 366 compresses and encodes the speech data, and send the data to speech server 110 through a bidirectional communication link 368.

Codec 366 also include software to decode and decompress speech data received from speech server 110. After decoding and decompressing, the data is sent to a wave mixer 370, which also accepts data from an ambient sound generator 372. The signal generated by wave mixer 370 is sent to adaptive echo cancelor 362 and two loudspeakers 376 and 377.

**Determination of the Acoustic Characteristics of a User Station**

When computer 114 in user station 104 is first turned on, the acoustic characteristics of user station 104 need to be determined. This involves the determination of the bulk delay and the acoustic transfer function of user station 104.

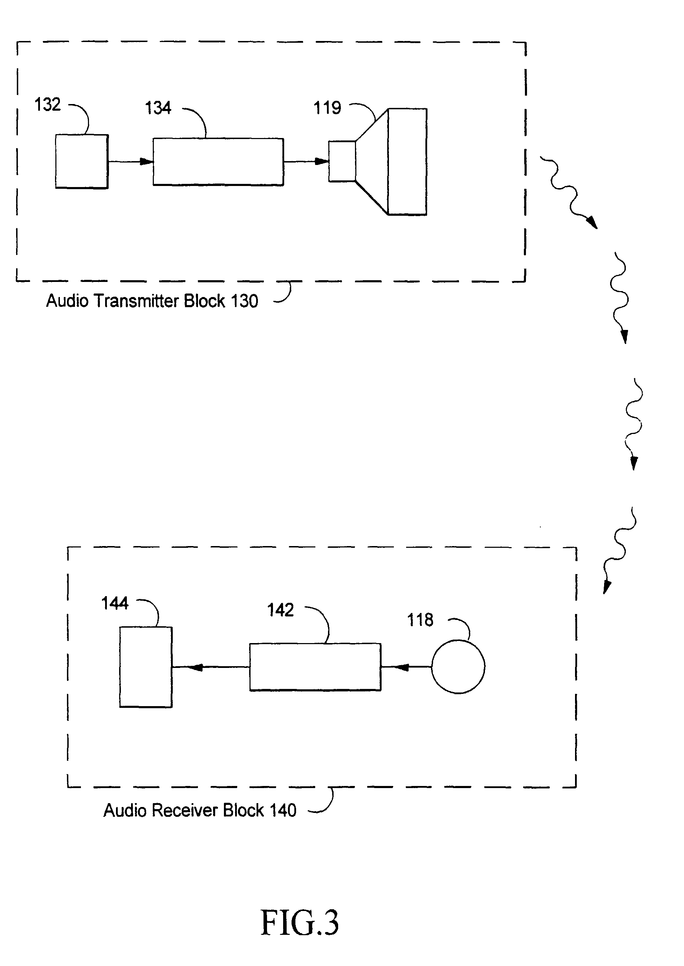

Fig. 3 is a block diagram of an arrangement capable of measuring the acoustic characteristics of user station 104. Like elements in Figs. 1 and 3 share like reference numerals. This arrangement comprises an audio transmitter block 130 and an audio receiver block 140. Block 130 includes loudspeaker 119 which generates an audio signal in response to the magnitude of an analog electrical signal applied thereto. The analog signal is derived from the content of a digital play buffer 134. Bits in buffer 134 are shifted to a digital-to-analog converter (not shown) at a predetermined rate. Thus, the audio signal generated by loudspeaker 119 is determined by the bits in buffer 134. Audio transmitter block 130 also contains a signal generation block 132 for generating bits for storing into buffer 134 so as to cause loudspeaker 119 to generate audio signals having a specified relationship between amplitude and time.

Audio receiver block 140 contains microphone 118 for receiving the audio signals generated by loudspeaker 119. The received audio signals are converted to digital form by an analog-to-digital converter (not shown). The digital information is shifted to a record buffer 142 at a predetermined rate. A signal analysis block 144 analyzes the digital information in buffer 142 to generate a relationship between the amplitude of the received audio signal and time.

One aspect of the present invention is a simple method to determine the acoustic characteristics of user station 104. This method involves the following steps:

(1) measure the bulk delay between buffer 134 and buffer 142 through loudspeaker 119;
(2) measure the transfer function between loudspeaker 119 and microphone 118;
(3) measure the bulk delay between buffer 134 and buffer 142 through loudspeaker 120; and
(4) measure the transfer function between loudspeaker 120 and microphone 118.

The acoustic characteristics of user station 104 may change over time during a virtual world session. Consequently, the acoustic system needs to be "re-trained" at predetermined times. One aspect of the present invention is a non-intrusive way to re-train the acoustic system.

**Measuring the Bulk Delay**

The measurement involves (i) generating a chirp signal by signal generation block 132, (ii) filling buffer 134 with bits corresponding to the chirp signal, and (iii) transmitting acoustic signal of the chirp signal by loudspeaker 119. The signal received by microphone 118 is then analyzed by signal analysis block 144.

The chirp signal is defined as

$$c(n) = sin(\frac{\pi}{N} * n^2),$$

for $n = 0, 1, ..., (N-1)$,
and 0 otherwise. N is the length of the chirp signal.

The signal received by the microphone is processed by a matched filter, which is a digital finite impulse response (FIR) filter, with an impulse response of

$$h(n) = sin(\frac{\pi}{N} * (N-1-n)^2),$$

for $n = 0, 1, ... (N-1)$,
and 0 otherwise. N is the length of the chirp signal defined above.

The output of the matched filter is

$$y(p) = \sum_{0}^{N-1} x(p - k)^* h(k)$$

where $k(n)$ is the signal recorded into buffer 142. Let "T" be the instant at which the matched filter output has maximum amplitude, then the bulk delay for the channel is estimated as (T-N). In the current implementation, the value of N used is 512. The expected bulk delay range is 1,000 to 3,000 samples.

A similar bulk delay of the loudspeaker 120 and microphone 118 pair is obtained by the same method.

**Measuring the transfer Function**

The measurement involves generating a white-noise signal by signal generation block 132 and transmitting its associated acoustic signal by loudspeaker 119. Then by using the signal received by microphone 118 and the white noise transmitted, the impulse response of the echo channel (from loudspeaker 119 to the microphone 118) is determined as follows. Let x(n), n = 0, 1, ..., (L-1) be the white noise sequence, y(n) be the signal received by the microphone, h(n), n = 0, 1, ..., (M-1) be the impulse response of the echo channel and B be the bulk delay of the channel, then

$$y(n) = \sum_{0}^{M-1} x(n - B - k)^* h(k) + w_n$$

where $w_n$ is the background noise in the system. A value of M=3 80 is sufficient to perform good echo cancellation. Using the least-squares estimation technique, the impulse response of the channel can be estimated by solving the matrix equation

$$R_{xx} H = R_{xy},$$

where $R_{xx}$ is the (M by M) auto-correlation matrix of the white noise, $R_{xy}$ is an (M by 1) cross-correlation vector and $H = [h(0) h(1) ... h(M-1)]^T$ is the echo filter impulse response vector. $R_{xx}$ is computed as

$$R_{xx}(i,j) = \sum_{0}^{L-1} x(n-i)^{\cdot} x(n-j), \text{ for } i=0,1,...,(M-1) \text{ and } j=0,1,...,(M-1).$$

$R_{xy}$ is computed as

$$R_{xy}(i) = \sum_{0}^{L-1} x(n)^{\cdot} y(n+B+i) \text{ for } i+0,1,...,(M-1).$$

Similar calculation is performed to obtain the characteristics of the echo channel between the loudspeaker 120 and the microphone 118 pair. It is preferable to use a value of L = 10*M to obtain accurate estimate of echo channel filter characteristics.

**Quick training**

Quick training is performed if the user perceives that the echo cancellation is not yielding satisfactory results or the system detects the same. Quick training can be performed to adjust the bulk-delay and/or the echo channel gain of user station 104, changed as a consequence of altering the speaker volume control. It can also detect if the full-training is needed.

The quick training involves (i) loudspeaker 119 transmitting an acoustic signal $x(n) = G*h(M-1-n)$ for $n = 0,1,...,(M-1)$ and 0 otherwise, and (ii) microphone 188 receiving the acoustic signal, y(n). The value of G is chosen to be

$$30000 / \underset{n}{Max}(|h(n)|)$$

The symbol ^T is used to designate the instant at which this signal (i.e., y(n)) peaks. First it is determined if full training is needed. If the echo channel characteristics have not deviated much from the previous calculations, the shape of the received signal (i.e., y(n)) around it peak (i.e., around $n = T$) will be similar to that of the echo channel auto-correlation function obtained using the relation

$$r(k) = \sum_{0}^{M-1-k} h(n)^{\cdot} h(n+k)$$

around k=0.
Therefore, if

$$\sum_{0}^{3} (\frac{y(T+k)}{Gg} - r(k))^2$$

is greater than a certain threshold, then it will be determined that the echo path impulse response has changed substantially and a full training is performed. The value of g is obtained using the equation where

$$g = \frac{y(T)}{\left( G^{\cdot} \sum_{0}^{(M-1)} h^2(n) \right)}.$$

When full training is not required, the bulk delay and gain of the echo filter is updated to new values, (T-M) and $h_{new}(n) = g^*h(n)$, $for\ 0 \leq n < (M-1)$.

The length and strength of the signal used for re-training is less than that of the signals used during full training. Thus, the quick training is generally not noticeable by people in user station 104. The quick training is performed for both the echo channels.

## Adaptive Echo Cancellation

Let $h_1(n)$, $0 \leq n < M$, be the impulse response of the echo path from left speaker to the microphone and $h_r(n)$, $0 \leq n < M$, be the impulse response of the echo path from left speaker to the microphone. Furthermore, let $B_l$ and $B_r$ be the respective bulk delays. Let, $x_1(n)$ and $x_r(n)$ be the speech samples being fed to the left and right speakers. Then, the echo cancellation is performed by subtracting

$$e_n = \sum_{k=0}^{(M-1)} \left\{ x_1(n - B_1 - k)^* h_1(k) \right\} + \left\{ x_r(n - B_r - k)^* h_r(k) \right\}$$

from the signal recorded by the microphone, $y_n$. This computation can be implemented using the fast Fourier Transform algorithm or directly.

## Adaptive Silence Detection

Due to non-linearity in the transducers (speakers and microphone), it is impossible to achieve perfect echo cancellation. This residual echo can be perceived by the listeners when the speaker is not speaking. Therefore, to eliminate echo when the near-end speech is absent, silence detection is performed and no speech packets are transmitted during the silence periods (i.e., when the near-end speaker is not speaking). By not transmitting speech information during the period of time when there is a silence, the bandwidth requirement of the system is further reduced. This additional bandwidth can be used to transmit other information (e.g., graphics and/or control information).

In a typical environment, silence is not the same as no measurable audio signal. This is because there is always some background noise and (some times) residual echo. Thus, microphone 118 generally receives some audio signal, even when there is no speech. The equation of audio input to microphone 118 is given by:

$$A_n = S_n + E_n + B_n$$

where $A_n$ is the amplitude of sound received by microphone 118, $S_n$ is the contribution due to speech, $E_n$ is the contribution due to the residual echo, and $B_n$ is the contribution due to background noise.

The present invention makes use of the fact that human speech contains periods of silence. Thus, audio signal corresponds to background noise and echo during this periods.

In one embodiment of the present invention, microphone 118 monitors the short-term signal energy (computed every 20 msecs using a block of 20 msec signal) in a time period of one second. The segment having the lowest energy is assumed to be in a period of silence (i.e., $S_n = E_n = 0$). Using the echo signal computed as earlier, the expected echo energy for a given time period can be easily computed. The residual echo energy for the given period is estimated to be equal to 0.1 times the expected echo energy. This assumes a conservative echo cancellation of 10 dB. Since $S_n$, $E_n$, and $B_n$ are generated independently, the energy in the signal $A_n$ can be assumed to be equal to the sum of energy in each of the three component signals. In other words, $E_s = E_A - E_E - E_B$, where $E_s$ is the speech energy, $E_A$ is the energy in recorded speech, $E_E$ is the residual echo energy and $E_B$ is the background noise energy. A recorded segment of data is classified as silence if $E_s$ is found to be below a certain threshold. Otherwise, the recorded speech is compressed and the compressed information is transmitted to the server.

## Software Automatic Gain Control

The PC microphone is very sensitive to the distance between the speaker's mouth and the microphone. Automatic gain control (AGC) module is used to reduce this sensitivity. Most multi-media PCs provide this functionality using hardware solution. Need for the software AGC arises because use of hardware AGC introduces non-linearity in the data which can affect the performance of echo and cancellation. The software AGC is implemented as follows:

1. Initially set *currentGain* = 1.0.
2. Once every 60 msecs compute the root mean squared (rms) value using the relation

$$rms = \max(\sqrt{\frac{1}{n}\sum_{n=0}^{(N-1)} x_n^2}, \quad 512),$$

where $x_n$ is echo free (i.e., echo removed) non-silence input speech data.
3. Compute target AGC gain, *targetGain* using the relation

$$targetGain = \min\left(targetGain, \frac{4096}{rms}\right)$$

4. set *n=0* and do the following *N* times

$x_n \leftarrow currentGain*x_n$
$currentGain \leftarrow 0.95*currentGain + 0.05*targetGain$
$n \leftarrow n + 1$

**An Efficient Speech Coding Scheme for Voice Bridging Application**

In a multi-point voice conferencing (i.e., voice bridging) system, each participant speaks into his microphone connected to his multi-media computer or work station. The computer performs data compression to enable efficient data transmission using modem to the server. The server collects the speech packets from each participant. Using the knowledge about the position of the participants and the direction of their faces, the server decides which speakers (a maximum of two), if any, should be heard by each listener. In doing so, the server should be able to combine bit-streams from two speakers into one bit-stream, so that this bit-stream can be transmitted on the modem. The multi-media system at the client side will use this bit-stream to synthesize the voice of two participants, combine them and generate a composite signal which is played out through the speakers along with the ambient sound. The unique feature of the speech coding technique presented here is that it is designed to work as a dual rate coder. That is the most important parameters of the speech coder output are coded at a rate of 6,400 bits per second. Additional information, which can be used to improve the quality of synthesized speech, is coded using another 6,400 bits per second. This way, the coder can function as a high quality speech compression system at 12,800 bit per second or as a communication quality speech compression system at 6,400 bits per second. When we need to transmit the voice data about two speakers, the server allocates 6,400 bits per second (i.e., half-rate) for each speaker's voice. However, when only one person's speech information needs to be transmitted to a client, full bandwidth is allocated for one speaker's voice data; thus permitting higher quality speech synthesis. The ability to take a 12,800 bits per second bit-stream and convert it easily into a half-rate bit-stream (i.e., 6,400 bits per sec bit-stream) can also be exploited when more control or graphics information has to be transmitted along with the speech data from the client to the server.

The algorithm allows for the client to make the decision for the server as to which of the arbitrary number of voice streams that could be sent to the client are actually chosen. Since the client knows the location of each of the speakers, it can choose to take into account distance between the listener and speakers as well as direction of sight of all avatars, objects that might be in the "path of the sound," even allow for different sound mediums (i.e. underwater, on a windy hill). The priority decision process is continually re-evaluated, and when this re-evaluation occurs fast enough, it can approximate to having many more concurrent streams between server and client than actually exist.

The algorithm allows each client to make such a decision independently of the others, hence allowing a client to provide the best audio experience for the user, taking into account the machine and bandwidth limitations of that particular client.

**LPC Analysis**

The speech compression system implemented here is based on the general principle of Linear Prediction Coding (LPC) of speech using multi-pulse excitation signals described in B. S. Atal and J. R. Remde, "A new model for LPC excitation for producing natural sounding speech at low bit-rates," *Proc. Int. Conf. On Acoustics Speech and Signal Processing,* Paris, France, 1982, pp. 614-617. The speech signal, $S_n$ , is modeled as follows,

$$s_n = \sum_{0}^{M-1} a_k s_{n-k} + p_n + w_n$$

as the output of a digital time-varying infinite impulse response filter excited by a sequence of irregularly spaced pulses of different amplitudes, where, $a_k$, $0<k\leq M$, are the $M^{th}$ order LPC filter coefficients. The filter order is typically about 10.

$p_n$ represents multi-pulse sequence, and

$W_n$ represents the random noise sequence.

The time varying filter coefficients are obtained using LPC analysis as described in S. Shankar Narayan and J. P. Burg, "Spectral Estimation of quasiperiodic data", *IEEE Transactions on Acoustics Speech and Signal Processing,* March 1990, pp.512-518.-554-II-557. Prior to LPC analysis, the speech data is pre-emphasized using a first order filter of the form $P(z)=(1-0.875z^{-1})$. The coefficient estimation is performed once every 5 msecs. However, for the purpose of speech coding only every fourth parameter set are used. The higher rate of computation is for the purpose of lip-synch parameter estimation, which will be discussed later. Typically 10-32 pulses are used to represent the multi-pulse excitation function. The synthesized speech quality depends on the number of pulses used (more the better). However, the amount of data compression achieved also depends on the number of pulses used to represent the excitation function (fewer the better). In order to transmit this information over the modern, the LPC parameters are quantized using a two-stage vector quantizer followed by a scalar quantizer to generate a 38-bit representation of the LPC filter. This procedure is discussed next.

**Vector and Scalar Quantization**

1. Convert the LPC filter coefficients to reflection coefficients using the transformation described in J. Markel and A. Gray, Linear Prediction of Speech, Springer-Verlag, 1976. Reflection coefficients are another representation of LPC filter coefficients. The transformation from one set of parameters to the other is loss less and invertible. Let $k_i, 0<i\leq M$, be the M reflection coefficients corresponding to the computed LPC filter coefficients.
2. Convert the first four reflection coefficients to log-area-ratio (lar) functions using the method described in J. Markel and A. Gray, Linear Prediction of Speech, Springer-Verlag, 1976. Use the transformation

$$lar_i = \ln\left[\frac{1+k_i}{1-k_i}\right],$$

where ln[.] stands for natural logarithm operation.
3. The 10 parameters $lar_1,\cdots,lar_4,k_5,\cdots,k_{10}$ are quantized using a 64-codebook vector quantizer. The procedure for codebook generation and implementation of vector quantizer is described in Y. Linde, A. Buzo and R. M. Gray, "An Algorithm for Vector Quantizer Design", *IEEE Trans. On Communications,* Jan 1980, pp. 84-95; R. M. Gray, "Vector Quantization," *IEEE ASSP Magazine,* April 1984, pp. 4-29. The vector quantizer accepts the vector $X=[lar_1,\cdots,lar_4,k_5,\cdots,k_{10}]^t$, searches through a codebook with 64 entries, finds the output sequence best matching the input vector in the mean squared sense and outputs a 6-bit codeword index $i1_{opt}$. The decoder can look up the corresponding codeword in its codebook and obtain the sequence $qX_1=[lar'_1,\cdots,lar'_4,k'_5,\cdots,k'_{10}]^t$ as a 6-bit approximation to the given input vector.
4. A difference vector $dX_1=X-qX_1$ is formed and is vector quantized again using a 64-codebook vector quantizer, generating codeword index $i2_{opt}$ and the sequence $qX_2=[lar''_1,\cdots,lar''_4,k''_5,\cdots,k''_{10}]^t$
5. A difference vector $dX_2=dX_1-q$ is formed next. Now each component of this vector is quantized individually (i. e., using scalar quantizers). The number of bits used to quantize each components are [4, 3, 3, 3, 3, 2, 2, 2, 2, 2]. This 26-bit information along with the 2 6-bit VQ codes $i1_{opt}$ and $i2_{opt}$ forms the 38-bit representation of the LPC filter and this information will be a part of the packet of information to be transmitted as encoded speech information. Let the quantized values of the vector $qX_2$ be defined as
$qX_3=[lar'''_1,\cdots,lar'''_4,k'''_5,\cdots,k'''_{10}]^t$, then, the decoded value of the vector X as $\hat{X}=qX_1+qX_2+$
6. From this $\hat{X}$ vector, the quantized LPC filter coefficients can be obtained by performing the needed transformations (i.e., log-area-ratio to reflection coefficients and reflection coefficients to LPC filter coefficients). The sequence $\hat{a}_k$, $0 < k \leq M$, is used to designate the resulting filter coefficients.

**Generation of multi-pulse excitation parameter**

Using an analysis by synthesis approach, the multi-pulse excitation parameters (i.e., pulse positions and amplitudes) are obtained as follows: Let $S_n$ represent speech data in a 20 msec frame and let $\hat{a}_n$, $0 < n \leq M$ be the LPC filter coefficients obtained for this frame of speech. Compute the residual signal, $r_n$, using the relationship,

$$r_n = s_n - \sum_{k=1}^{M} s_{n-k} * \hat{a}_k$$

Compute impulse response of the perceptual weighting filter using the relationship
$h_n = 0$ for $n < 0$
$h_0 = 1$ and

$$h_n = \sum_{k=1}^{M} h_{n-k} * \lambda^k * \hat{a}_k$$

for $0 < n < L$,
where $\lambda = 0.85$ and L is chosen as 40.
Next form two sequences

$$p_n = \sum_{k=0}^{\min(n,L)} h_{n-k} * h_k \quad \text{for} \quad 0 \leq n < (2L-1)$$

and

$$q_n = \sum_{k=0}^{\min(2L-1, n+L-1)} r_{n+L-1-k} * p_k \quad ,$$

for $0 \leq n < (L - 1)$

$$= \sum_{k=0}^{2L-1} r_{n+L-1-k} * p_k \quad ,$$

for $(L - 1) \leq n < (N-L)$

$$= \sum_{k=n+L-N}^{2L-1} r_{n+L-1-k} * p_k \, ,$$

for $(N-L) \leq n < (N+L-1)$ In other words the sequence $p_n$ is obtained by convolving the sequence $h_n$ with itself and the sequence $q_n$ is obtained by convolving the residual sequence, $r_n$, with $p_n$.

Let $q'_n = q_n$

The location of an excitation pulse is chosen to be the value of $n$ for which $q'_n$ is maximum. Let this location be $l_i$, then the height of the pulse, $h_i$ is obtained using the relationship

$$h_i = q'_{\ell_i} / p_{(L-1)}$$

After each pulse information (i.e., location and height) is obtained, the sequence $q'_n$ is modified using the relation

$$q'_n \leftarrow q'_n - h_i \, p_{(n+L-1-\ell)}$$

This sequential procedure is continued until the desired number of excitation pulses are determined. Using the pulse locations thus obtained, the optimal height information is then obtained by solving the matrix equation $S_{xx} h = S_{xy}$, where $S_{xx}$ is an (M x M) matrix whose $(i,j)^{th}$ element is equal to $L-1+|l_i-l_j|$, $S_{xy}$ is an (Mx1) vector, whose $i^{th}$ element is equal to $q_{t_i}$ and h is an (M x 1) vector of excitation impulse heights.

In an embodiment of the present system, 12 excitation pulses are first determined sequentially for every 20 msec of speech data and then the pulse heights are optimized. 38-bits of LPC coefficient information along with the information about these 12 excitation pulses (i.e., height and amplitude) can be used as transmission parameters of a speech coding system with a bit-rate of 6,400 bits per second. The contribution from these 12 pulses are subtracted from the sequence $q_n$ and an additional 14 excitation pulses are obtained using the same approach. In essence, 26 multi-pulse excitation pulses are determined in two stages. 38-bits of LPC coefficient information along with the information about these 26 excitation pulses (i.e., height and amplitude) can be used as transmission parameters of a speech coding system with a bit-rate of 11,600 bits per second. In voice bridging application, the client system (i.e., multi-media computer station) in addition to sending the server this 11,600 bits per second bit stream, also sends an additional information of (1,200 bit per second bitstream) as to which 12 pulses should be chosen amongst these 26 pulses if the server wants to generate 6,400 bits per second bitstream data. Thus the bandwidth required to send speech information to the server is 12,800 bit per second, while the server sends the compressed speech data to the client either at 11,600 bits per second (in case of one speaker) or 12,800 (2x6,400) bits per second (in case of two speakers). The encoding of the excitation pulse information is now described.

**Pulse Position Coder**

Positions of 26 excitation pulses computed for each 20 msec segments of speech have to be coded efficiently in order to accomplish low-bit rate speech coding. 20 msec of speech corresponds to 160 samples of speech. Each pulse can be in one of the 160 locations, but no two pulse can have the same location. Combinatorial coding scheme presented in M. Berouti, *et. al.* "Efficient Computation and Encoding of the multi-pulse excitation for LPC," *Proc. Int. Conf. On Acoustics Speech and Signal Processing*, San Diego, CA, 1984, pp. 10.1.1-10.1.4. is used to code this information using 102 bits. The encoder uses the combinatorial coding scheme to code the information needed by the server to select 12 pulses out of these 26 pulses ($^{26}C_{12}$ combinations or 24-bits) in order to generate half-rate bit stream. The same strategy is used in coding the positions of 12 pulses in the case of half-rate coder. Thus a total of 114 bits are needed to code the pulse location information for every 20 msecs.

**Pulse Amplitude Coder**

Amplitudes of 26 excitation pulses computed for each 20 msec segments of speech have to be coded efficiently in order to accomplish low-bit rate speech coding. The pulse amplitudes are coded efficiently by normalizing them by the root mean-square (rms) pulse amplitude. After scaling, the pulse amplitudes are quantized using an 8-level gaussian quantizer described in T. Max, "Quantizing for minimum distortion," *IRE Trans. On Information Theory,* vol. 16, 1970, pp. 7-12. The rms pulse amplitude which is optimized to minimize the quantization noise is coded as a transmission parameter using 6 bits. Thus a total of 84 bits are needed to code the pulse amplitude information for every 20 msecs.

**An Efficient Lip Synching Method**

We have observed that the lip positions in human beings can be determined to a large extent by the first two peaks, known as formant frequencies, of the short-term spectra of the speech, and the short-term energy of the speech signal. Specifically, the separation between the first two formant frequencies is proportional to the width of the lip. The lower lip height tends to be proportional to the value of the first formant frequency. Finally the upper lip height and the lip rounding phenomenon (i.e., both the lips moving away from closed mouth position) is inversely proportional to the sum of the first two formant frequencies. In other words, both the first and second formant frequencies have to reduce to produce lip rounding. These estimates may not be identical to the real lip positions of the speaker, but when used for facial animation they are expected to provide very realistic effects. The method for computing lip positions comprises the following steps:

**Lip Information Extractor**

1. The LPC parameters estimated for the purpose of speech encoding (as discussed earlier) can be employed to obtain short-term spectral information in the speech data. However, the computational requirement for estimating the formant frequencies from the knowledge about the LPC filter information would be high. In one embodiment of the present invention, formant frequencies corresponding to each entry of the first 64-codeword VQ codebook is pre-computed in non-real-time and stored. Therefore, when the first stage vector quantization is performed on the LPC parameters, an estimate of formant frequencies is also obtained. The symbols $f_1$ and $f_2$ are used as the first two formant frequencies for a given segment of speech. Furthermore, the symbol $E$ is used as the signal energy for the frame in decibels (dB). Given the two formant frequencies and the signal energy and assuming a nominal lip width of size 1 unit, the following heuristics is used to get preliminary estimates of the lip positions:

**2. Filtering of signal energy information:** The signal energy, $E$, computed for a frame of speech includes the background noise energy also. The effect of background noise level should be eliminated before using this information for the calculation of lip positions. The following algorithm is used to modify the computed signal energy: Initially set

$AverageSignalLevel=0$ Once every 5 msecs, update this using the relation,

$AverageSignalLevel=0.999*AverageSignalLevel+0.001*E$ The signal energy, $E$, is updated as

$E{\leftarrow}E\text{-}(AverageSignalLevel\text{-}20)$ Set the value of $E$ to 0 if less than 0 and equal to 40 dB, if greater than 40.

3. **Lower Lip Height Computation:** If $f_1$ is in the range (300-800 Hz), compute lower lip height using the relation

$lowerLipHeight=1.5\ \text{-}cos(\pi(f_1\text{-}250)/500)*(E/80)$ Otherwise, lower lip height is computed using the relation

$lowerLipHeight=E/200$

4. **Lip Width Computation:** The heuristics here is not to change the lip width if $f_2$ is in the region 1000-1800 Hz range. If $f_2$ is in the range 700-1000 Hz range, the lip width is decreased using the relation

$lipWidth=1\text{-}[1+cos(\pi*(f_2\text{-}700)/300)]*E/133$ If $f_2$ is in the range 1800-2500 Hz range, the lip width is increased using the relation

$lipWidth=1+[1+cos(\pi*(f_2\text{-}1800)/700)]*E/200$

5. **Lip Rounding:** This is found to happen when $f_1 + f_2 < 1600$ , $250 < f_1 < 800$ and $700 < f_2 < 2500$ . Then

$upperLipHeight=1.2*E*[1.1+cos\{\pi*(f_1 + f_2\text{-}800)/800\}]/40$ and the lower lip height is modified using the equation

$lowerLipHeight=lowerLipHeight+0.6*E*[1.1+cos\{\pi*(f_1+f_2\ \text{-}800)/800\}]/40$ If lip rounding does not occur, the upper lip height depends mildly on the signal energy and is calculated as

$upperLipHeight=E/400$.

**Lip Filtering**

A lip position smoothing filter is used in the present embodiment. The instantaneous lip positions so obtained every 5 msecs (or 200 times a second) tend to be noisy. Furthermore, most visual displays are refreshed at a much lower rate (typically 6 to 30 times per second). A 31-point finite impulse response (FIR) low-pass filter with a cut-off frequency of 6.25 Hz is applied to each of the lip parameters to obtain smooth estimates of the parameters at the desired rate. In the current implementation, the smoothed lip parameters are computed 16.67 times per second.

**Lip Information Encoding**

The lip position variables are highly correlated. For example, when the mouth is widened, it is likely that the lip heights tend to be small. On the other hand, when mouth is rounded, the lip width is small and lip heights are large. This information is exploited in coding the lip position using a very few number of bits. In the present invention, 8 bits per 60 msec are used to encode all the lip position variables. The lower lip height information is coded using a 16-level quantizer and it can take the following values:

| Code | (Lower Lip Height * 5) |
|------|------------------------|
| 0 | 0.005 |
| 1 | 0.070 |
| 2 | 0.141 |
| 3 | 0.199 |
| 4 | 0.252 |
| 5 | 0.306 |
| 6 | 0.377 |
| 7 | 0.458 |
| 8 | 0.554 |
| 9 | 0.653 |
| 10 | 0.752 |
| 11 | 0.876 |
| 12 | 1.034 |
| 13 | 1.213 |
| 14 | 1.468 |
| 15 | 1.825 |

As the upper lip height information and the lip width are highly correlated, they are jointly quantized using a 16 level quantizer and can take the following values:

| Code | 5*UpperLipHeight | LipWidth |
|------|------------------|----------|
| 0 | 0.017 | 1.002 |
| 1 | 0.053 | 1.005 |
| 2 | 0.189 | 0.986 |
| 3 | 0.089 | 1.002 |
| 4 | 0.532 | 0.853 |
| 5 | 0.347 | 0.943 |
| 6 | 0.743 | 0.778 |
| 7 | 0.839 | 0.728 |
| 8 | 0.046 | 1.040 |
| 9 | 0.076 | 1.038 |
| 10 | 0.055 | 1.082 |
| 11 | 0.101 | 1.081 |
| 12 | 0.065 | 1.120 |
| 13 | 0.074 | 1.155 |
| 14 | 0.082 | 1.187 |
| 15 | 0.093 | 1.225 |

Thus the lip position information is coded using only 8 bits.

**Robot/Whisper Excitation Generator**

As pointed out earlier, the speech signal can be modeled as the output of a time-varying digital filter (i.e., LPC filter) excited by either random noise sequence or an impulse pulse train. Typically, when the spoken sound is a fricative (like sounds s, SH, f), the filter is excited by random noise. On the other hand, when vowels are spoken, the filter is excited by a quasi-periodic signal with a period corresponding to the pitch of the speaker. The filter excitation signal can be altered to accomplish the task of voice morphing. In the present invention, morphing involves modifying the excitation function parameters to produce the specific type of voice disguising and modification.

A whisper speech is produced when there is no vocal cord vibration, which translates to no periodic pulse excitation in the case of LPC synthesizers (i.e., using only random noise for exciting the LPC filter). If it is desirable to generate a whisper, the excitation signal is changed to a random noise. The energy of the random noise is adjusted so as to be proportional to the actual energy of the speech.

Robotic speech is produced when the pitch of the human speaker tends towards monotone (i.e., pitch changes very little during their talk). In the context of LPC synthesis, this translates to using a periodic pulse excitation function, whose period changes very little. The energy of these impulses should be adjusted such that the energy of the synthesized speech is equal to that of the original speech. The periodicity of the robotic speech is specified by the user. To reduce the buzz in the synthesized speech, a low frequency jitter is added to the periodicity information in the case of robotic speech.

**Voice Morpher**

Another type of voice morphing implemented in the system is that of altering the pitch of the speaker. This way, a male voice can be made to sound more like a female, and vice versa. The voice morphing is accomplished in two stages. Suppose the pitch frequency is to be increased by a factor $r$. First, the sampling frequency of the speech data is decreased by the same pitch change factor $r$ using speech interpolation/decimation technique. This also changes the duration of the speech samples (i.e., decreases the speech duration by a factor of $r$). In order to keep the duration of the pitch altered speech same as that of the original speech, time scale modification of the speech is performed using the technique described in Werner Verhelst, and Marc Roelands, "An overlapadd technique based on waveform similarity (WSOLA) for high quality time-scale modification speech," *Proc. Int. Conf. On Acoustics Speech and Signal Processing,* Minneapolis, 1993, pp. II-554-II-557. This type of voice morphing is performed on the speech data prior to performing speech analysis at the encoder.

**Bitstream Encoder**

The bitstream encoder accepts as input the various pieces of encoding information produced by the analyzer and pack them into a 96 byte packet, to be sent to the server once every 60 msecs. It should however be noted that the speech analysis is performed once every 20 msecs. Therefore, the bit-stream encoder uses three sets of analysis data to make one voice packet. The following set of parameters computed every 20 msec and are included in each voice packet:

1. VQ codeword $i1_{opt}$ (6-bits)
2. VQ codeword $i2_{opt}$ (6-bits)
3. 10 residual 1pc filter coefficients (26-bits)
4. rms pulse amplitude code (6-bits)
5. 26 pulse amplitude codes (78-bits)
6. pulse location code (114 bits)
7. Lip position information (8-bits per 60 msecs)
8. Speech type code (i.e., whether it is whisper, normal speech or robotic sound).

**Decoder Implementation**

The bitstream decoder accepts as input the voice packet set from the server and decodes them into various parameters to be used by the decoder to and implement the LPC synthesizer function to get synthesized speech. The synthesizer is implemented using the following difference function:

$$S_n = \sum_{0}^{M-1} \hat{a}_k \, S_{n-k} + P_n$$

where $\hat{a}_k$ are the decoded LPC filter coefficients of order $M$, $S_n$ are synthesized speech samples and $P_n$ are decoded excitation pulses.

**Adaptive Post Filter, Distance and Echo Filter, and Bandpass Filter**

Adaptive Post-filtering is discussed in J.H. Chen and A. Gersho, "Real-Time Vector APC Speech Coding at 4800 bps with adaptive post-filtering," *Proc. Int. Conf. On Acoustics Speech and Signal Processing* Dallas, 1987, pp. 2185-2188. This filtering is applied to the synthesized speech to further improve the speech quality. This system can create special sound effects to simulate the virtual space setting. For this purpose, echo or reverberation filtering can be employed. The echo filter is a first order infinite impulse filter with the following system function

$$H(z) = \frac{1}{1 - GZ^{-D}}$$

where $D$ is the reverberation delay and $G$ is the reverberation coefficient (which has a magnitude less than 1.0) to create the needed special effect. The bandpass filtering is applied to the output of the echo filter to remove the DC and low-frequency offset noise, and to effect the de-emphasis filtering. The filter transfer function is

$$H(z) = \frac{\left(1 - z^{-1}\right)}{(1 - 0.875z^{-1})\,(1 - \frac{63}{64}z^{-1})}$$

Using the knowledge about the spatial positions of the speaker and the listener in the virtual world, the distance filtering is implemented to convert the mono sound samples into stereo sound samples using the following algorithm:

1. Let $\Theta_l$ and $\Theta_s$, be listener and speaker angles in the virtual space and let d be the distance between them (in meters).

2. Then distance gain, $G_d$, is obtained as

$$G_d = 2 \ \ if \ d \langle 0.5$$
$$= 1/d, \ \ if \ 0.5 \leq d \langle 1.0$$
$$= 1/\sqrt{d} \ \ if \ d \rangle 1$$

3. The left and right distance filter coefficients are compputed as

$$L_1 = G_d * (0.65 - 0.35 * \sin(\Theta_l - \frac{\pi}{6})) * (0.65 + 0.35 * \cos(\Theta_s)) / (1.5 - 0.5 * \cos(\Theta_s))$$

$$L_2 = L_1 * (1 - \cos(\Theta_l)/2$$

$$R_1 = G_d * (0.65 - 0.35 * \sin(\Theta_l + \frac{\pi}{6})) * (0.65 + 0.35 * \cos(\Theta_s)) / (1.5 + 0.5 * \cos(\Theta_s))$$

$$R_2 = R_1 * (1 + \cos(\Theta_l)/2$$

4. Finally, the left and right channel speech samples are computed using the following filtering operations,

$$r_n = R_1 * x_n + R_2 * r_{n-1}$$

$$l_n = L_1 * x_n + L_2 * l_{n-1}$$

where $x_n$ is the output of speech synthesizer (mono sound), $l_n$ and $r_n$, are the resulting left and right channel sound sequences.

**Ambient Sound Generation**

In a virtual socialization environments, background sounds are generated to create special effects. Examples are when a participant leaves/enters a discussion group, the rest of the people in the group hear a sound like opening/ closing of a door. It could also be a background music in the virtual space. Such sounds are generated by this module.

**Wave Mixer**

The sound output through the acoustic speakers can be one of the following

1. One person's speech only
2. One person's speech with background sound (music or ambient noise to simulate virtual space).
3. Two person's speech only, or
4. Two person's speech with background sound (music or ambient noise to simulate virtual space.

The wave mixer takes as input different sound data streams, apply appropriate user specified gains, add them and finally apply soft clipping on the date to ensure high speech quality.

The invention now being fully described, it will be apparent to one of ordinary skill in the art that any changes and modifications can be made thereto without departing from the spirit or scope of the invention as set forth herein. Accordingly, the present invention is to be limited solely by the scope of the appended claims.

**Claims**

1. A system(100) for a plurality of users (104-106) conducting voice and image communication on a wide area network (112), each user being associated with a computer (114), a network access device (122) having a maximum data communication speed for connecting said computer to said network, a microphone (118) and a loudspeaker (119,120), said microphone generating speech signals in response to audio signals, which are then converted into digital speech data, said system comprising:

   a speech server (110) connected to said network for managing data streams sent by user computers associated with said users;
   an encoder (200) for running on each one of said user computers, said encoder (200) comprising:
   a compressor for compressing said speech data received by said encoder into compressed data, said compressor including means (222) for generating a plurality of linear predictive coding (LPC) parameters; and
   a bit stream encoder (232) for encoding said compressed data into an encoded data stream having a data rate below said maximum data communication speed;
   said bit stream encoder serving to generate a first encoded data stream having a first data rate from said speech data of a first user computer and to generate a second encoded data stream having a second data rate from said speech data of a second user computer and
   said server including means for combining said first and said second encoded data streams into a combined data stream having a data rate below said maximum data communication speed while said first and said second data rates have a sum above said maximum data communication speed; and
   a decoder (300) running on a third user computer, said decoder (300) comprising:
   means for receiving said combined data stream; and
   means for reconstructing said audio signals received by said microphones associated said first and said second user computers using information from said combined data stream.

2. A system according to claim 1, wherein said decoder (304) further comprises means for simulating acoustic distances between said first and said third user computers and between said second and said third user computers.

3. A system according to claim 1 or 2, wherein said decoder (300) further comprises means for simulating acoustic angles between said first and said third user computers and between said second and said third user computers.

4. A system according to claim 1 and further comprising:

   means for determining acoustic distance and acoustic angles between a selected user computer and a set of said user computers;

means for selecting a subset out of said set of user computers based on said acoustic distance and said acoustic angel; and

means for receiving by said selected user computer only data stream originated from said subset of user computers.

5. A system according to any one of claims 1 to 4, wherein said encoder (200) further comprises a voice morph means (214) for altering said speech signal.

6. A system according to claim 5, wherein the voice morph means serves to shift a pitch of said speech signals of at least one of said first and said second user computers.

7. A system according to claim 6, wherein said voice morph means shifts said pitch by a constant value.

8. A system according to claim 5, wherein said voice morph means comprises means for eliminating periodic components of said speech signals of at least one of said first and said second user computers.

9. A system according to claim 5, wherein said voice morph means comprises:

means for changing a sampling frequency of said speech signals; and
means for changing a time scale of said speech signals as a function of change in said sampling frequency.

10. A system according to any one of claims 1 to 9, wherein said encoder (200) further comprises means for determining a first formant frequency of said speech signals using said LPC parameters;

means for determining a second formant frequency of said speech signals using said LPC parameters; and each of said user computers further comprising means for displaying a lower lip position and an upper lip position using said first and second formant frequencies.

11. A system according to claim 10, wherein each of said user computers further comprises means for measuring energy of said speech signals, and wherein said means for displaying further including displaying a width of said lips as proportional of said second formant frequency and a height of said lower lip as related to said first formant frequency and said energy.

12. A system according to claim 10 or 11, wherein said means for displaying further comprises means for displaying lip rounding as inversely proportional to a sum of said first and said second formant frequencies.

13. A system according to claim 12, wherein said width is in a correlation relationship with said upper and said lower lip positions and said rounding.

14. A system according to claim 12 or 13, wherein said means for displaying further comprises means for smoothing said width, said height and said rounding using a filter.

15. A system according to claims 14, wherein said filter is a finite impulse response low-pass filter.

16. A system according to claim 11 or claim 12,13,14 or 15 when appended to claim 11, wherein said lower lip position is computed from:
if said first formant frequency is in the range of (300-800 Hz), said lower lip position (lowerLipHeight) is:

$$lowerLipHeight = 1.5\text{-}cos(\pi(f_1\text{-}250)/500)^*(E/80)$$

otherwise said lower lip position is:

$$lowerLipHeight=E/200$$

where E is said signal energy and $f_1$ is said first formant frequency.

**17.** A system according to claim 11 or claim 12, 13, 14, 15 or 16 when appended to claim 11, wherein said lip width (lipWidth) is computed from:

if said second formant frequency is in the range 700-1000 Hz range, said lip width is decreased.

$$lipWidth = 1-[1+cos(\pi*(f_2-700/300]*E/133$$

if said second formant frequency is in the range 1800-2500 Hz range, said lip width is increased

$$lipWidth=1+[1+cos(\pi(f_2-1800/700]*E/200;$$

where E is said signal energy and $f_2$ is said formant frequency.

**18.** A system according to any one of the preceding claims and further comprising means for determining a silence state in a surrounding of one of said user computers, said silence state being used by said compressor as an input for compressing said speech data, said means for determining said silence state comprising:

means for generating a first source signal which is substantially a chirp signal and for causing said microphone to play said first source signal as a first audio signal;
means for generating a first digital signal based on said first audio signal received by said loudspeaker;
a filter for processing said first digital signal matched to said chirp signal;
means for determining a bulk delay as a time when said processed first digital signal has a maximum value;
means for generating a second source signal which is substantially a white noise and for causing said microphone to play said second source signal as a second audio signal;
means for generating a second digital signal based on said second audio signal received by said loudspeaker;
means for determining a cross-correlation function of said second source signal and said second digital signal;
means for generating an auto-correlation of said second source signal;
means for determining a finite impulse response as a function of said cross-correlation and said auto-correlation function;
means for determining an echo cancellation energy using said finite impulse response and said bulk delay;
mans for measuring acoustic energy received by said microphone; and
means for measuring background noise energy;
said surroundings being classified to be in said silence state when $E_A - E_E - E_B$ is below a predetermined value, where $E_A$ is said acoustic energy measured by said microphone, $E_E$ is said echo cancellation energy, and $E_B$ is said background noise energy.

**19.** A method for determining acoustic characteristics of a room havinga microphone and a loudspeaker, said microphone being connected to a computer through an analog to digital converter and said loudspeaker being connected to said computer through a digital to analog converter, said method comprising the steps of:

generating, by said computer, a first source signal which is substantially a chirp signal,
converting said first source signal to a first audio signal by said digital to analog converter and said microphone;
receiving said first audio signal by said loudspeaker;
converting said received first audio signal by said analog to digital converter to generate a first digital signal;
processing said first digital signal by a filter matched to said chirp signal; and
determining a bulk delay as a time when said processed signal has a maximum value.

**20.** A method according to claim 19, further comprising the steps of generating, by said computer, a second source signal which is substantially a white noise;

converting said second source signal to a second audio signal by said digital to analog converter and said microphone;
receiving said second audio signal by said loudspeaker;
converting said received second audio signal by said analog to digital converter to generate a second digital signal;
determining a cross-correlation function of said second source signal and said second digital signal; and determine a finite impulse response as a function of said cross-correlation and an auto-correlation function of said second source signal.

21. A method according to claim 20 or 21, comprising the step of determining an echo cancellation signal by

$$e_n = \sum_0^{(M-1)} \{x_1 (n - B_1 (k)\} + \{x_r(n - B_r k)*h_r (k)\}$$

where h(k) is said finite impulse response and said B is said bulk response.

100

User
Station
106

User
Station
105

Speech
Server
110

Internet
112

User Station 104

118

116

119

114    126    120

122

FIG.1

ENCODER BLOCK DIAGRAM

FIG.2A

EP 0 779 732 A2

FIG.2B

Decoder Block Diagram

EP 0 779 732 A2

FIG.2C

132    134    119

Audio Transmitter Block 130

144    142    118

Audio Receiver Block 140

FIG.3